Europäisches Patentamt

European Patent Office

Office européen des brevets

(19)

(11) Publication number: **0 501 589 A1**

## (12) EUROPEAN PATENT APPLICATION

(21) Application number: **92200577.2**

(22) Date of filing: **27.02.92**

(51) Int. Cl.5: **F02M 27/04**, F23C 11/00, B01J 19/08

(30) Priority: **27.02.91 BE 9100185**

(43) Date of publication of application:
**02.09.92 Bulletin 92/36**

(84) Designated Contracting States:
**AT BE CH DE DK ES FR GB GR IT LI LU MC NL PT SE**

(71) Applicant: **HANDELSBURO "ZWOLLE"**
**Van Spilbergenstraat 32**
NL-8023 XM Zwolle(NL)

(72) Inventor: **Van Dop, Abraham**
**Van Spilbergenstraat 32**
**NL-8023 XM Zwolle(NL)**

(74) Representative: **'t Jong, Bastiaan Jacobus**
**OCTROOIBUREAU ARNOLD & SIEDSMA**
**Sweelinckplein 1**
**NL-2517 GK 's-Gravenhage(NL)**

(54) **Fuel modifier.**

(57) The invention relates to a fuel modifier (15) comprising a through-flow element (16) for receiving in a fuel supply conduit (7), particularly of a combustion engine (1), which through-flow element (16) is provided on both sides with connections for the fuel conduit (28) and wherein an elongate channel (20) extends between the connections (28) and which comprises at least one permanent magnet (21,22,36) which is mounted such that it generates locally in the elongate channel (20) a magnetic field strength in the order of magnitude of at least 0.1 T.

FIG.2

The invention relates to a fuel modifier of the type as described in the European patent 0 182 052. This relates to a through-flow element for receiving in a fuel supply conduit, in particular of a combustion engine, in which element permanent magnets are received. The fuel flowing through the through-flow element is thereby exposed to a magnetic field. The result hereof is that the fuel can combust with a higher yield, while fewer harmful substances are released during this combustion.

The fuel modifier according to the invention is characterized in claim 1. In recent tests by an independent institute on vehicles with a diesel engine a marked fuel saving of 5 to 6% and a very marked reduction in soot emission of 60 to 70% were observed.

By applying the step of claim 2 the fuel modifier according to the invention obtains a very compact construction. With magnets of the type mentioned therein, the desired field strength is already achieved with a small volume.

A very favourable structural embodiment of the fuel modifier according to the invention is can be found in claim 3.

With the fuel modifier according to this embodiment the fuel flows in the direction of the magnetic lines of force through the through-flow element.

When the cylindrical magnet or magnets are embodied as annular magnets as characterized in claim 4, the fuel can likewise flow through the central opening and be exposed there to the magnetic field.

A favourable further embodiment is characterized in claim 5. The through-flowing fuel is carried into a revolving flow by the helical pressure springs whereby the magnetic field can act well on all the parts of the fuel.

With the step of claim 6 is achieved that between the windings of the helical spring extending around the magnet or magnets a helical channel forms through which the fuel is constrained to flow. The fuel hereby covers a great distance while it is exposed to the influence of the magnetic field.

A further development is characterized in claim 7. Due to the relatively large surface of the helical pressure springs in the through-flow direction the influence on the through-flowing fuel is great.

A further development of the fuel modifier according to the invention is characterized in claim 8. The annular magnets can be mutually coupled in a simple manner due to their own magnetic force. Owing to the comparatively great length in the through-flow direction the through-flowing fuel can be exposed to the action of the magnetic field for a considerable time.

A favourable structural step is to be found in claim 9.

The invention likewise relates to and provides a fuel supply device as defined in claim 10. It has been found that the action exerted on the fuel by the fuel modifier is retained for a longer period. By now arranging the fuel modifier in the circuit line the fuel is repeatedly guided through the modifier so that the fuel is repeatedly exposed to the action of the modifier, which results in a reinforcement of the favourable action.

The invention is further elucidated in the following description with reference to the annexed figures.

Figure 1 shows a schematic view of a combustion engine with fuel supply device.

Figure 2 shows an embodiment of the fuel modifier according to the invention.

Figure 3 shows a view corresponding with figure 2 of another embodiment of the fuel modifier according to the invention.

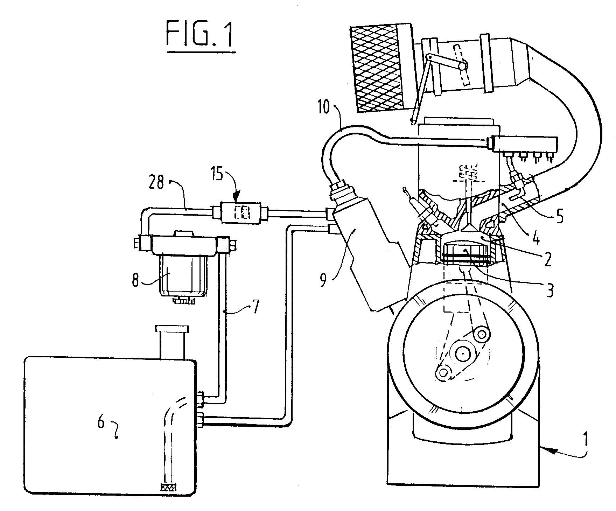

The combustion engine 1 shown in fig. 1 comprises in known manner at least one cylinder 2 in which a piston 3 can move up and down. Fed into the cylinder 2 via the inlet conduit 4 is combustion air to which fuel is added by means of an injector 5.

The supplied fuel comes from a fuel tank 6 and is supplied via a supply conduit 7, a fuel filter 8 and a pump 9 under pressure via the pressure conduit 10 to the injector 5.

In the embodiment shown a fuel conduit 28 is present between the filter 8 and the pump 9 in which a fuel modifier 15 according to the invention is received. From the pump 9 a return conduit returns to the fuel tank 6. A part of the fuel which has passed through the fuel modifier 15 according to the invention is thus carried back to the tank 6 and is thereafter pumped up again and passes through the fuel modifier 15 again.

Repeatedly flowing through the fuel modifier 15 results in the action of the modifier on the fuel being reinforced.

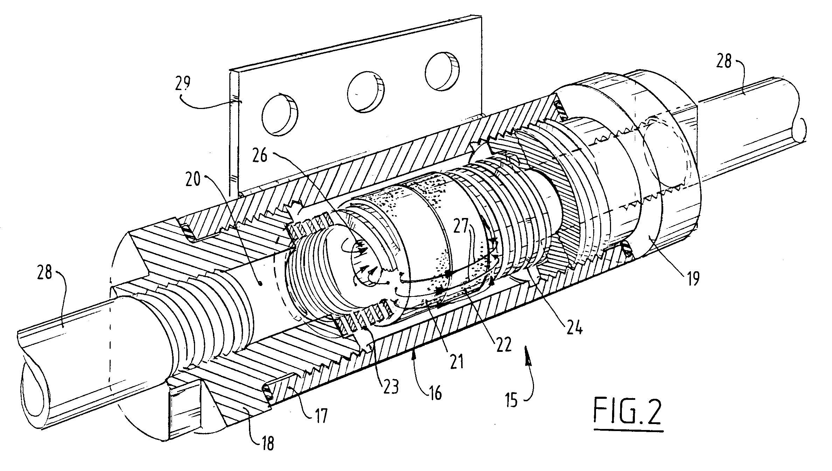

As shown in figure 2, the applied embodiment of the fuel modifier according to the invention 15 comprises a through-flow element 16 that is built up of a cylinder 17 having on both sides a screw fitting 18 and 19 respectively. Connections for the fuel conduit 28 are included in these screw fittings 18 and 19. Thus defined in the through-flow element 16 is an elongate channel 20 through which the fuel flows. Two annular magnets 21, 22 mutually combined into a tube shape are received in this channel 20. These magnets 21, 22 are clamped by means of helical pressure springs 23, 24 between the screw fittings 18 and 19 respectively.

Fixed to the cylinder 17 is a mounting support 29 with which the fuel modifier can be mounted to a bearing part.

The helical springs 23, 24 are wound from flat material such that the largest dimensioning of the cross section of the material extends transversely of the centre line of the spring and thus transversely of the centre line of the channel 20. The through-flowing fuel comes into contact with the helical springs 23, 24 and is thereby set into a revolving flow. A portion of the fuel flows through the central opening 26 of the annular magnets 21, 22 and another portion flows through the annular gap-shaped space between the inner wall of the cylinder 17 and the outer wall of the magnets 21, 22.

The magnets 21, 22 are manufactured such that opposite poles are situated on the opposite annular surfaces. The magnets 21, 22 are mutually combined in that they are mutually attracted simply by magnetic force. The surfaces of the magnets 21, 22 lying against each other thereby have of course an opposite polarity. Because the opposite poles are situated on the opposite annular surfaces of the annular magnets the lines of force extend both in the central opening and along the outer surface thereof in the lengthwise direction of the channel 20. The magnetic lines of force are schematically designated with the reference numeral 27.

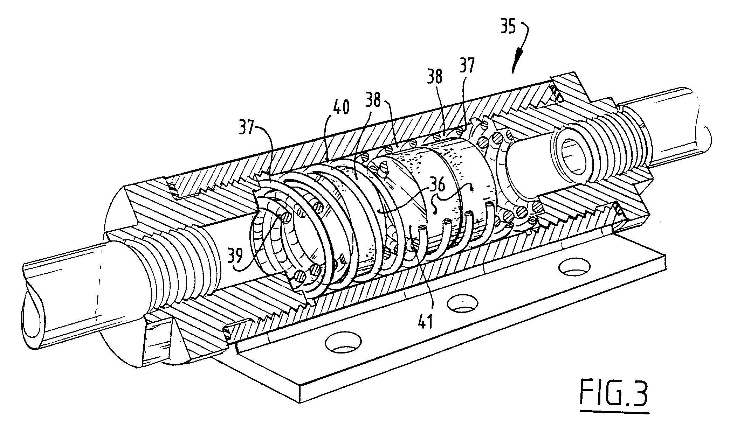

The fuel modifier 35 as shown in figure 3 corresponds to a considerable extent with that shown in figure 2. The corresponding parts are therefore not described further.

Three cylindrical magnets 36 which are not annular are received in the fuel modifier 35. The fuel can therefore only flow along the outer periphery of the magnets 36. A helical spring 37 is arranged around the magnets 36. The thickness of the material from which the helical spring 37 is wound is substantially equal to the width of the interspace between the magnets 36 and the cylindrical inner wall of the housing of the modifier 35. The helical spring 37 thus lies at least virtually against both the cylindrical wall 40 and the magnets 36. Between the windings of the helical spring 37, the magnets 36 and the cylinder wall 40 a helical channel 38 is thus formed. The fuel is constrained to flow through this helical channel 38 and thus covers a relatively long path under the influence of the magnetic field generated by the magnets 36.

The fuel entering the fuel modifier 35 is constrained to flow to the outer periphery and therein passes over the helical pressure spring 39. In the manner already described above eddying is hereby generated in the fuel flow so that the fuel flowing through the helical channel 38 is in a strongly eddying state which is favourable for the action of the magnetic force field thereon. In the interspace 41 between the single magnet and the pair of magnets an eddying is again introduced into the fuel or the eddying already present is reinforced.

In a preferred embodiment the magnets are of NEODYMIUM (NdFeB). These magnets provide a strong magnetic field with small dimensions. The fuel modifier 15 according to the invention can thereby be given a compact construction and the through-flow section of the fuel along the magnet can therein remain small so that the effect of the magnetic field on the fuel can be optimal.

Use of the fuel modifier according to the invention is not limited to a petrol engine as shown schematically in figure 1. The modifier can be used in all combustion devices which consume hydrocarbon fuels. The location of the modifier in the fuel conduit is not essential. The modifier can for instance be arranged between the filter 8 and the pump 9 as shown in fig. 1 but also in the pressure conduit 10 between the pump and the injector 5. Although this cannot be stated with certainty, the most favourable location is probably as close as possible to the combustion space.

In the embodiment shown in figure 2 the diameter of the central opening 26 of the magnets 21, 22 is roughly 70% of the diameter of the fuel conduit passage. This provides a suitable ratio between the different dimensions.

## Claims

1. Fuel modifier comprising a through-flow element for receiving in a fuel supply conduit, particularly of a combustion engine, which through-flow element is provided on both sides with connections for the fuel conduit and wherein an elongate channel extends between the connections and which comprises at least one permanent magnet which is mounted such that it generates locally in the elongate channel a magnetic field strength in the order of magnitude of at least 0.1 T.

2. Fuel modifier as claimed in any of the foregoing claims, **characterized in that** the magnet is of NEODYMIUM (NdFeB).

3. Fuel modifier as claimed in claim 1 or 2, wherein the permanent magnet is a cylindrical magnet which is received lying with its centre line in the direction of the channel, wherein the cylindrical magnet is manufactured such that opposite poles are situated on the opposite circular surfaces whereby the magnetic lines of force extend along the outer periphery of the magnet substantially parallel to the centre line.

4. Fuel modifier as claimed in claim 3, wherein the permanent magnet is an annular magnet and the magnetic lines of force extend in the central opening thereof substantially parallel to the centre line.

5. Fuel modifier as claimed in claim 3 or 4, wherein the cylindrical magnet or magnets are clamped between helical pressure springs which support against stop surfaces close to each of the connections.

6. Fuel modifier as claimed in any of the claims 3-5, wherein the channel has a cylindrical internal shape at the position of the cylindrical magnet or magnets and around the cylindrical magnet or magnets extends a helical spring the material of which has substantially the same thickness as the interspace between the magnet or magnets and the cylindrical inner wall.

7. Fuel modifier as claimed in claim 5 or 6, wherein the helical springs are wound from flat material such that the largest dimension of the cross section of that material extends transversely of the centre line of the spring.

8. Fuel modifier as claimed in any of the claims 3-7, wherein this comprises a number of annular magnets mutually combined into a tube shape.

9. Fuel modifier as claimed in any of the claims 3-8, wherein the diameter of the central opening of the magnet or magnets amounts to roughly 70% of the diameter of the passage of the fuel conduit.

10. Fuel supply device, in particular for a combustion engine, comprising a fuel supply conduit coming from a fuel supply, a pump received in the fuel supply conduit and a return conduit which is connected to the supply conduit on the delivery side of the pump and leads back to the fuel supply or the fuel supply conduit on the suction side of the pump, wherein a fuel modifier as claimed in any of the foregoing claims is received in the circuit around the pump defined by the return conduit.

# FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 414 951 (SANETO)<br>* column 3, line 62 - column 4, line 9; figure 1 *<br>* column 4, line 66 - column 5, line 39; figures 6,7 * | 1,4,8,10 | F02M27/04<br>F23C11/00<br>B01J19/08 |
| X | GB-A-2 174 146 (KAISHA)<br>* page 1, line 117 - page 2, line 19; figures 2,3 * | 1,2 | |
| A | US-A-4 716 024 (PERA)<br><br>* column 4, line 41 - column 5, line 53; figures 1,2 * | 1,4,5,7,<br>8,9 | |
| A | WO-A-8 900 451 (KAISHA)<br>* abstract ; fig. 9, 10 * | 1,3,8,10 | |
| A | EP-A-0 073 077 (S.B.H. TRADING)<br>* page 3, paragraph 3 -paragraph 5; figures 3,4 * | 1,6,7 | |

TECHNICAL FIELDS SEARCHED (Int. Cl.5)

F02M
F23C
B01J

The present search report has been drawn up for all claims

| Place of search | Date of completion of the search | Examiner |
|---|---|---|
| THE HAGUE | 01 JUNE 1992 | VAN ZOEST A.P. |

EPO FORM 1503 03.82 (P0401)